# EUROPEAN PATENT SPECIFICATION

(11) **EP 3 850 999 B1**
(45) Date of publication and mention of the grant of the patent: **20.12.2023**
(21) Application number: 21162281.6
(22) Date of filing: 03.02.2017
(51) Int. Cl.: A47J 43/07

(54) **SPIRALIZED ATTACHMENT FOR FOOD PROCESSOR SYSTEM**
SPIRALAUFSATZ FÜR KÜCHENMASCHINE
FIXATION SPIRALÉE POUR ROBOT CULINAIRE

(30) Priority: 03.02.2016 US 201662290724 P
(43) Date of publication of application: 21.07.2021
(62) Divisional of application: 17704652.1
(73) Proprietor: SharkNinja Operating LLC, Needham, MA 02494 (US)
(72) Inventor: CHAMBERS, Oliver Henry Sherston, London, SE23 1NT (GB); POTTER, James Richard, Windsor, SL4 3DS (GB); CODY, Thomas Edward Kingsborough, Surrey, TW1 1LU (GB); ELDRIDGE, Colden, Needham, MA Massachusetts 02494 (US); LEE, Damian, Needham, MA Massachusetts 02494 (US); BRUNNER, Charles Stewart, North Reading, MA 01864 (US)
(74) Representative: Carroll, Christopher P.

(56) References cited:
- WO-A1-2016/191538
- FR-A1- 2 962 023
- JP-U- S55 175 095
- US-A- 5 839 826
- US-A1- 2006 198 241

## Description

### BACKGROUND

This application is directed to a food processor, and more particularly, to a food processor having one or more unique features designed for enhancing the safety, ease of use, and/or versatility of the food processor.

Blenders are commonly used to process a plurality of different food products, including liquids, solids, semi-solids, gels and the like. It is well-known that blenders are useful devices for blending, cutting, and dicing food products in a wide variety of commercial settings, including home kitchen use, professional restaurant or food services use, and large-scale industrial use. They offer a convenient alternative to chopping or dicing by hand, and often come with a range of operational settings and modes adapted to provide specific types or amounts of food processing, e.g., as catered to particular food products.

FR2962023A1 describes a spiralizer attachment for a kitchen appliance comprising:a blade plate including at least one arm for rotatably supporting said blade plate, said blade plate including a slot and at least one blade, wherein rotation of said blade plate relative to a food item forms at least one continuous slice of said food item.

### SUMMARY

According to one embodiment not encompassed by the wording of the claims but considered as useful for understanding the invention, a spiralizer attachment for a kitchen appliance includes a body and a rotatable plate associated with the body. The blade plate includes a slot and at least one blade. Rotation of the blade plate relative to a food item forms at least one continuous slice of the food item.

In addition to one or more of the features described above, or as an alternative, in further embodiments comprising a base, not encompassed by the wording of the claims but considered as useful for understanding the invention, said base is configured to attach to said blade plate such that said at least one continuous slice is collected within said base.

In addition to one or more of the features described above, or as an alternative, in further embodiments not encompassed by the wording of the claims but considered as useful for understanding the invention, said base is configured to couple to a rotatable component of said body.

In addition to one or more of the features described above, or as an alternative, in further embodiments not encompassed by the wording of the claims but considered as useful for understanding the invention, said base includes an attachment area having a contour generally complementary to said rotatable component.

In addition to one or more of the features described above, or as an alternative, in further embodiments not encompassed by the wording of the claims but considered as useful for understanding the invention, said blade plate includes a first blade and a second blade, each of the first blade and the second blade having at least one cutting surface.

In addition to one or more of the features described above, or as an alternative, in further embodiments not encompassed by the wording of the claims but considered as useful for understanding the invention, a height of said first blade is adjustable to control a thickness of said continuous slice.

In addition to one or more of the features described above, or as an alternative, in further embodiments not encompassed by the wording of the claims but considered as useful for understanding the invention, a position of said second blade relative to said first blade defines a length of said continuous slice.

In addition to one or more of the features described above, or as an alternative, in further embodiments not encompassed by the wording of the claims but considered as useful for understanding the invention, said at least one cutting surface of said second blade divides said at least one continuous slice into a plurality of elongated strands.

In addition to one or more of the features described above, or as an alternative, in further embodiments not encompassed by the wording of the claims but considered as useful for understanding the invention, said second blade is selected from one of a plurality of interchangeable second blades, each second blade having a distinct configuration of said at least one cutting surface.

In addition to one or more of the features described above, or as an alternative, in further embodiments not encompassed by the wording of the claims but considered as useful for understanding the invention, said plurality of interchangeable second blades are mounted to a movable component connected to said blade plate, said movable component being moved to select one of said plurality of interchangeable second blades.

In addition to one or more of the features described above, or as an alternative, in further embodiments comprising a removable lid, not encompassed by the wording of the claims but considered as useful for understanding the invention, said removable lid has an opening and a hollow interior configured to cooperate with said blade plate to receive said food item.

In addition to one or more of the features described above, or as an alternative, in further embodiments not encompassed by the wording of the claims but considered as useful for understanding the invention, said removable lid includes a food receiving component movable between a first position, adjacent an upper surface of said lid and a second position.

In addition to one or more of the features described above, or as an alternative, in further embodiments not encompassed by the wording of the claims but considered as useful for understanding the invention, said lid includes a plurality of movable jaws adjacent said opening, said plurality of movable jaws being configured to cooperate to maintain said food item received therein aligned within said opening.

In addition to one or more of the features described above, or as an alternative, in further embodiments not encompassed by the wording of the claims but considered as useful for understanding the invention, comprising a plunger insertable into opening, a force applied by said plunger maintains contact between said food item and said blade plate.

According to another embodiment not encompassed by the wording of the claims but considered as useful for understanding the invention, a kitchen appliance is provided including a food processor including a driven rotatable component and a spiralizer attachment configured for removable association with said food processor. The spiralizer attachment includes at least one blade operably coupled to said rotatable component such that rotation of said at least one blade about a food item forms at least one continuous slice of the food item.

In addition to one or more of the features described above, or as an alternative, in further embodiments not encompassed by the wording of the claims but considered as useful for understanding the invention, said spiralizer attachment further includes: a base connected to said rotatable component for rotation about an axis; and a blade plate connected to said base, wherein said blade plate includes a slot and said at least one blade, said at least one continuous slice being collected within said base.

In addition to one or more of the features described above, or as an alternative, in further embodiments not encompassed by the wording of the claims but considered as useful for understanding the invention, said food processor further includes: a processor base having a rotary component; and a container configured to couple to said processor base, said container including a rotatable assembly, wherein said rotatable assembly includes a coupling component configured to engage said rotary component when said container is mounted to said processor base to drive said rotatable assembly and said rotatable component about the axis.

In addition to one or more of the features described above, or as an alternative, in further embodiments not encompassed by the wording of the claims but considered as useful for understanding the invention, said base includes an attachment area having a contour generally complementary to said rotary component.

In addition to one or more of the features described above, or as an alternative, in further embodiments not encompassed by the wording of the claims but considered as useful for understanding the invention, said blade plate includes a first blade and a second blade, each of said first blade and said second blade having at least one cutting surface.

In addition to one or more of the features described above, or as an alternative, in further embodiments not encompassed by the wording of the claims but considered as useful for understanding the invention, a height of said first blade is adjustable to control a thickness of said continuous slice.

In addition to one or more of the features described above, or as an alternative, in further embodiments not encompassed by the wording of the claims but considered as useful for understanding the invention, a position of said second blade relative to said first blade defines a length of said continuous slice.

In addition to one or more of the features described above, or as an alternative, in further embodiments not encompassed by the wording of the claims but considered as useful for understanding the invention, said at least one cutting surface of said second blade divides said at least one continuous slice into a plurality of elongated strands.

In addition to one or more of the features described above, or as an alternative, in further embodiments not encompassed by the wording of the claims but considered as useful for understanding the invention, said second blade is selected from one of a plurality of interchangeable second blades, each second blade having a distinct configuration of said at least one cutting surface.

In addition to one or more of the features described above, or as an alternative, in further embodiments not encompassed by the wording of the claims but considered as useful for understanding the invention, said plurality of interchangeable second blades are mounted to a movable component connected to said blade plate, said movable component being moved to select one of said plurality of interchangeable second blades.

In addition to one or more of the features described above, or as an alternative, in further embodiments, comprising a removable lid, not encompassed by the wording of the claims but considered as useful for understanding the invention, said removable lid has an opening and a hollow interior configured to cooperate with said blade plate to receive said food item.

In addition to one or more of the features described above, or as an alternative, in further embodiments not encompassed by the wording of the claims but considered as useful for understanding the invention, said removable lid includes a food receiving component, said food receiving component being movable between a first position, adjacent an upper surface of said lid and a second position.

In addition to one or more of the features described above, or as an alternative, in further embodiments not encompassed by the wording of the claims but considered as useful for understanding the invention, a portion of said lid includes a plurality of movable jaws adjacent the opening, the plurality of movable jaws being configured to cooperate to maintain said food item received therein aligned within said opening.

In addition to one or more of the features described above, or as an alternative, in further embodiments not encompassed by the wording of the claims but considered as useful for understanding the invention, comprising a plunger insertable into said opening, a force applied by said plunger maintaining contact between said food item and said blade plate.

According to the invention a spiralizer attachment for a kitchen appliance includes a blade plate including at least one arm for rotatably supporting said blade plate. The blade plate including a slot and at least one blade, wherein rotation of said blade plate relative to a food item forms at least one continuous slice of said food item.

Preferably in further embodiments said area extending between said at least one arm and said blade plate is substantially open.

Furthermore according to the invention said blade plate includes a first arm and a second arm arranged diametrically opposite one another about a periphery of said blade plate, wherein an interface between said first arm and said second arm couples said blade plate to a rotating component.

Preferably in further embodiments said blade plate is rotated about an axis by a motor.

Preferably in further embodiments said blade plate is rotated about an axis manually.

Preferably in further embodiments said blade plate is rotatably mounted within a container.

Preferably in further embodiments said kitchen appliance is a food processing system.

Preferably in further embodiments said kitchen appliance is a single serving food processing system.

Preferably in further embodiments said kitchen appliance is a food processing system.

According to another aspect of the invention a method of spiralizing a food item includes installing a spiralizer attachment within a kitchen appliance. The spiralizer attachment includes a rotatable blade plate having a slot and at least one blade. A food item is arranged in contact with a surface of the spiralizer attachment and the kitchen appliance is operated such that said blade plate rotates about an axis relative to said food item to form at least one continuous slice of the food item. Said blade plate further including a first arm and a second arm arranged diametrically opposite one another about a periphery of said base plate, an interface between said first arm and second arm coupling said base plate to a rotating component.

Preferably in further embodiments installing said spiralizer includes coupling said spiralizer attachment to a rotating component of said kitchen appliance.

Preferably in further embodiments said spiralizer attachment is directly coupled to said rotating component.

Preferably in further embodiments said spiralizer attachment is indirectly coupled to said rotating component.

Preferably in further embodiments said kitchen appliance includes a base mounted to said rotating component, said spiralizer attachment being mounted to said base.

Preferably in further embodiments said blade plate is rotated about an axis by a motor.

Preferably in further embodiments said blade plate is rotated about an axis manually.

### BRIEF DESCRIPTION OF THE FIGURES

The accompanying drawings incorporated in and forming a part of the specification embodies several aspects of the present invention and, together with the description, serves to explain the principles of the invention. In the drawings:
FIG. 1 is a perspective view of an example of a food processing system;
FIG. 2 is a front view of a spiralizer blade attachment configured for use with a food processing system according to an embodiment;
FIG. 3 is a bottom view of a spiralizer blade attachment configured for use with a food processing system according to an embodiment;
FIG. 4 is a detailed view of the spiralizer blade attachment of FIG. 2 according to an embodiment;
FIG. 5 is a top view of a spiralizer blade attachment configured for use with a food processing system according to an embodiment;
FIG. 6 is a top view of a lid of a food processing system according to an embodiment;
FIG. 7 is a top view of a food processing system including a spiralizer blade attachment according to an embodiment;
FIG. 8 is a bottom perspective view of a spiralizer blade attachment and a lid of a food processing system according to an embodiment;
FIG. 9 is a perspective view of a food processing system including a spiralizer blade attachment;
FIG. 10 is a detailed view of the food processing system of FIG. 9 according to an embodiment;
FIG. 11 is a perspective view of a portion of a food processing system including a spiralizer blade attachment according to an embodiment;
FIG. 12 is another perspective view of a food processing system including a spiralizer blade attachment according to an embodiment;
FIG. 13 is a top view of a container of a food processing system including a base mounted to the rotatable assembly according to an embodiment;
FIG. 14 is a perspective view of a lid and a plunger of the spiralizer attachment according to an embodiment;
FIG. 15 is an exploded perspective view of a food processing system including a spiralizer attachment according to an embodiment;
FIGS. 16 and 16a are cross-sectional views of a food processing system including a spiralizer attachment and a plunger according to an embodiment;
FIG. 17 is a cross-sectional view of a food processing system including a spiralizer attachment according to an embodiment;
FIGS. 18a-18d are bottom views of blade plates having various blade configurations according to an embodiment;
FIG. 19 is a perspective view of a spiralizer attachment according to another embodiment;
FIG. 20 is a perspective view of an example of a kitchen appliance suitable for use with the spiralizer attachment according to an embodiment;
FIG. 21 is a front view of an example of a kitchen appliance suitable for use with the spiralizer attachment according to an embodiment;
FIGS. 22A and B are perspective views of the base of the spiralizer attachment according to an embodiment; and
FIGS. 23A and B are perspective views of the base of the spiralizer attachment according to another embodiment.

The detailed description explains embodiments of the invention, together with advantages and features, by way of example with reference to the drawings.

### DETAILED DESCRIPTION

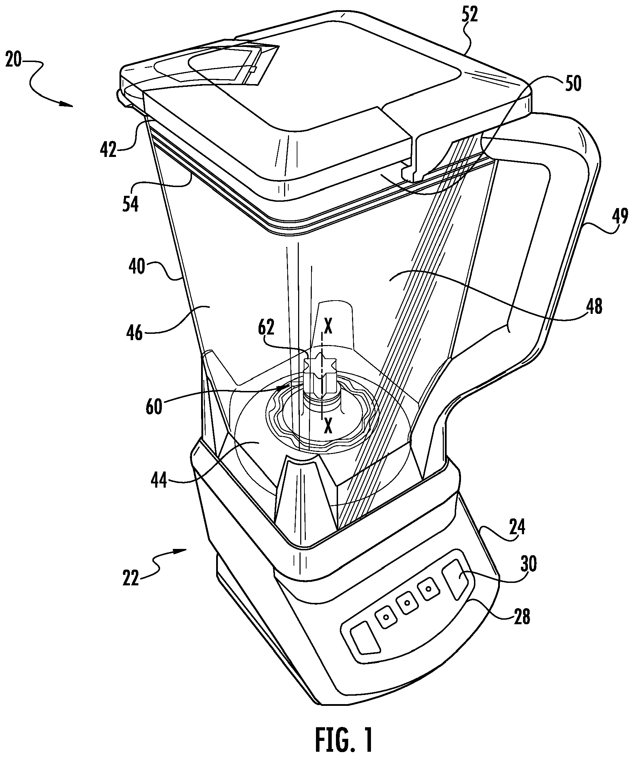

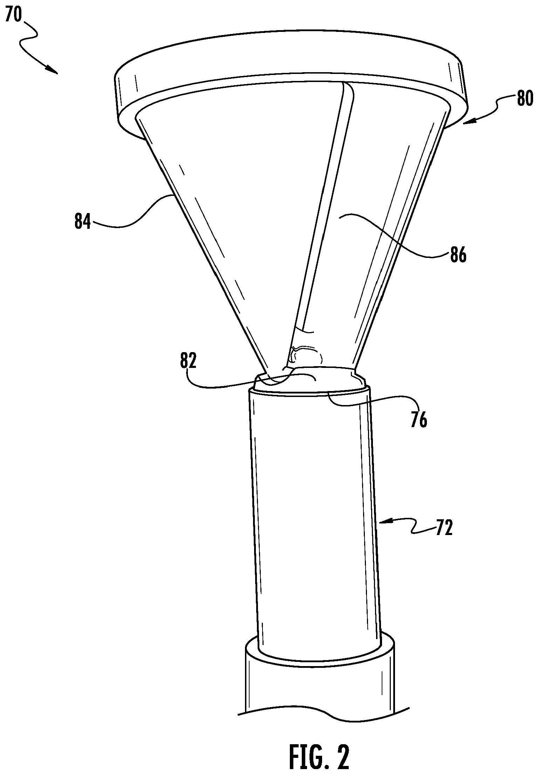

Referring now to the FIG. 1, an example of a motorized kitchen appliance, such as a multi-functional food processing system 20 for example, is illustrated in more detail. In general, the food processing system 20 can be adapted to perform any food processing or blending operation including as non-limiting examples, dicing, chopping, cutting, slicing, mixing, blending, stirring, crushing, or the like. Although an example of a food processing system 20 is illustrated and described herein, other food processing systems are within the scope of the present disclosure. The food processing 20 system includes a base 22 having a body or housing 24 within which a motorized unit (not shown) and at least one controller (not shown) are located. The base 22 includes at least one rotary component, such as a drive coupler 26 (see FIG. 2) for example, driven by the motorized unit within the body 24. The base 22 additionally includes a control panel or user interface 28 with including at least one input device 30 for turning the motorized unit on and off and for selecting various modes of operation, such as pulsing, blending, or continuous food processing.

The food processing system 20 additionally includes a container 40 adapted (e.g. sized and dimensioned) to receive one or more food products therein to be processed. The container 40 generally includes a first end 42, a second end 44, and one or more walls 46 extending there between to define an interior chamber 48 within which food products are placed and processed. As shown in the illustrated, non-limiting embodiment, a handle 49 may be integrally formed with at least a portion of the container 40, such as a sidewall 46 for example. As best shown in the embodiment illustrated in FIG. 1, the top 42 of the container 40 includes an opening 50 that provides access for the one or more food items into the chamber 48. The second end 44 is generally closed such that food products contained within the chamber 48 are unable to escape through the second end 44.

A lid 52 generally complementary in size to the opening 50 is attached to the first end 42 of the container 40. The lid 52 may be removably secured to the container 20, such as via a plurality of threads, or a press-fit configuration. Alternatively, the lid 52 may be configured to fixedly attach to the first end 22 of the container. Inclusion of the lid 52, such as during a food processing and/or blending operation restricts movement of the one or more food products from the chamber 48 via the first end 42 of the container 40. In one embodiment, the lid 52 may be shaped or include one or more features to prevent the accumulation of food particles thereon. In addition, a gasket 54 may be positioned between the lid 52 and the first end 42 to form a seal preventing a food product from spilling out at the interface between the lid 52 and the opening 50.

Depending on the type of food processing system 20 being used, the container 40 may be configured to slidably or rotatably attach to the base 22. In the illustrated, non-limiting embodiment, the container 40 is moved vertically to connect to the base 22. However, in other embodiments, sliding or rotational movement of the container 40 in a direction other than the direction of downward movement of the container 40 onto the base 22 may be necessary to successfully mount the container 40 to the base 22. In one embodiment, the connection formed between the base 22 and the container 40 is intended to limit unintended movement of the container 40 relative to the base 22 during operation of the food processing system 20.

In the illustrated, non-limiting embodiment, a rotatable assembly 60 including a spindle 62 extends through the second end 44 into the chamber 48 of the container 40. Mounted to a portion of the spindle 62 adjacent an underside of the container 40 is a coupling component (not shown) configured to engage the rotary component of the base 22. As a result of this engagement, the motorized unit within the base 22 may be used to drive rotation of the spindle 62 about an axis X.

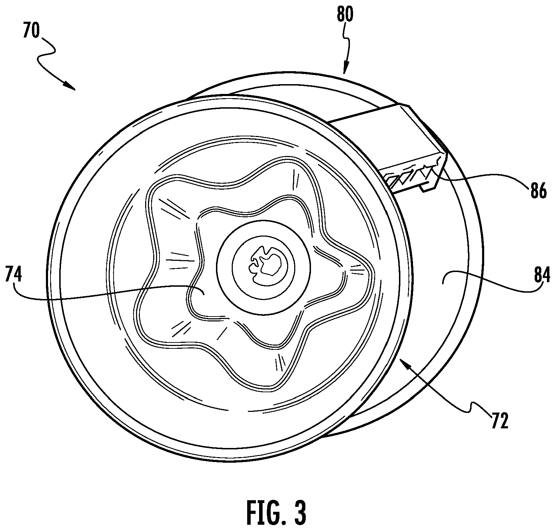

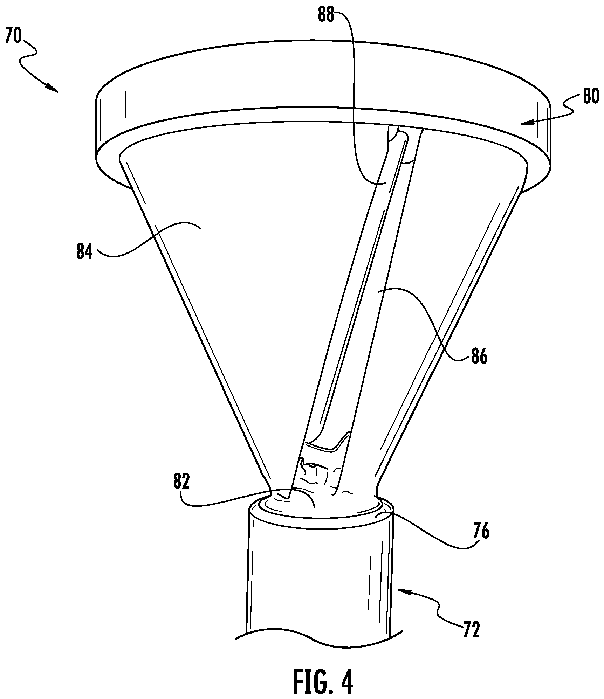

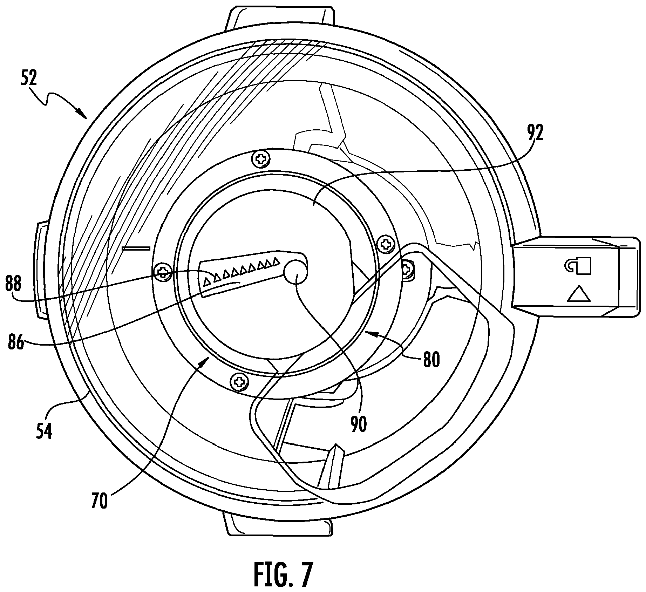

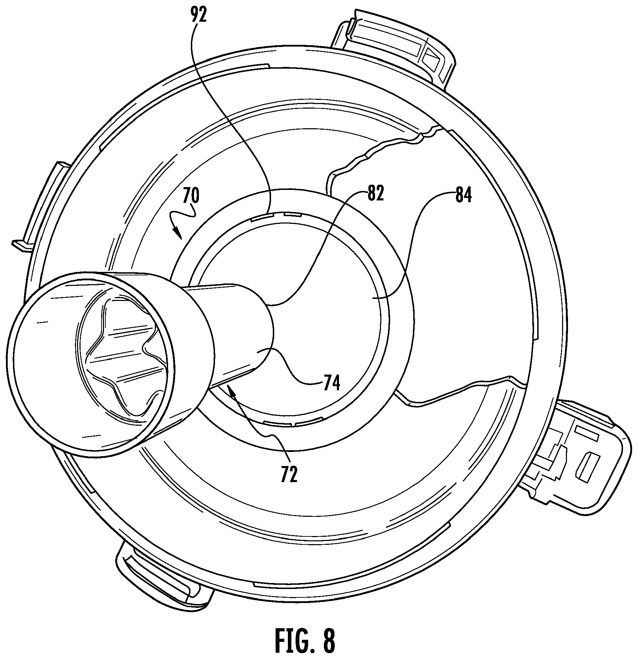

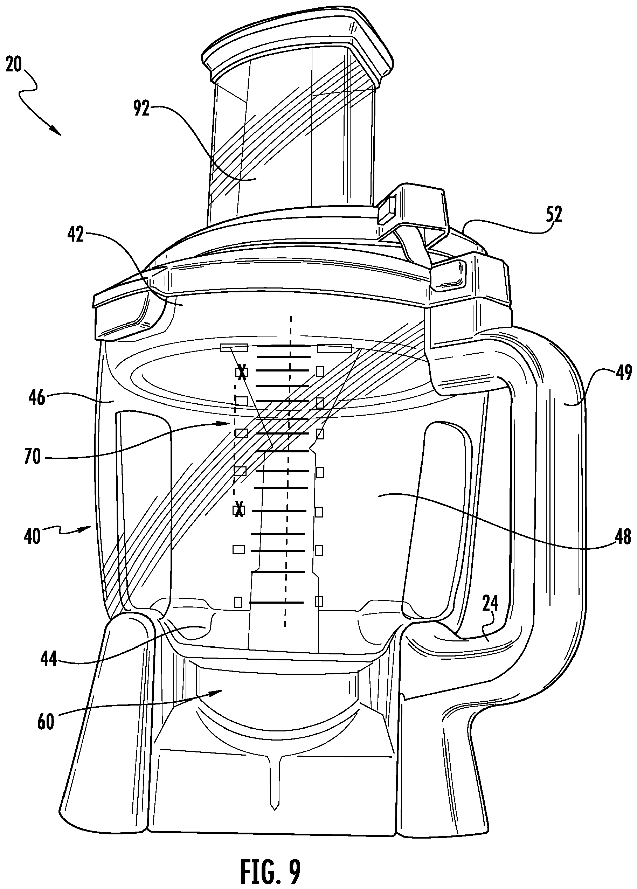

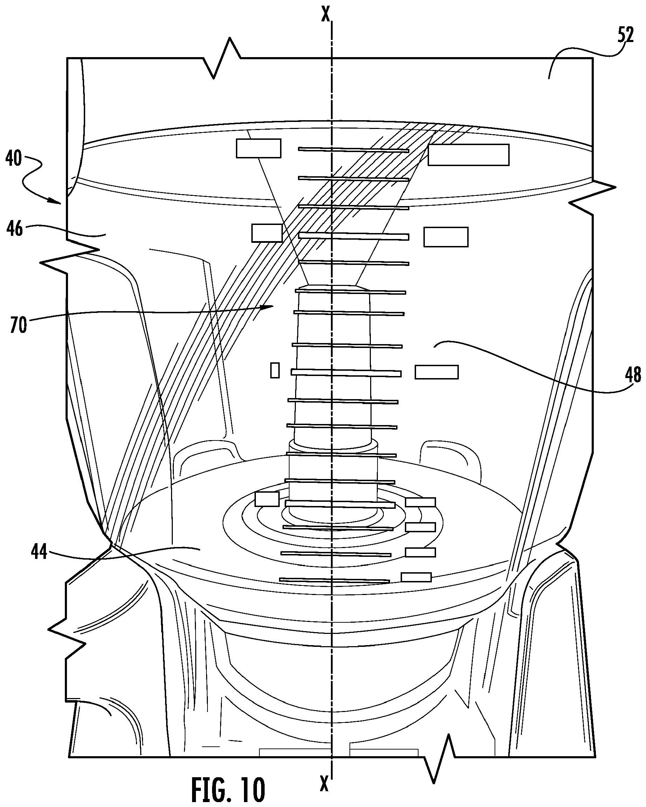

A plurality of interchangeable attachments 70 varying in size and/or functionality may be configured for use with the rotatable assembly 60 for the processing of food products located within the chamber 48 of container 40. Referring now to FIGS. 2-10, an example of a spiralizer attachment 70 configured for use with the food processing system 20 is illustrated. The spiralizer attachment 70 is configured to cut or slice a food item to form one or more elongated strands. The spiralizer attachment 70 includes a base 72 and a receiver portion 80. The base 72 is configured to couple to a portion of the rotatable assembly 60. In one embodiment, the base 72 includes an attachment area 74 (see FIG. 3) having a contour generally complementary to and configured to receive or mate with at least a portion of the spindle 62 such that rotation of the rotatable assembly 60 similarly drives rotation of the base 72 about axis X.

The receiver portion 80 is configured to receive any of a variety of foods, including fruits and vegetables, such as, zucchini, cucumber, potato, carrot, and squash for example. In the illustrated, non-limiting embodiment, the receiver portion 80 is generally conical in shape. However, other shapes are also within the scope of the disclosure. A first end 82 of the receiver portion 80, such as the apex end thereof, may be attached to a portion of the base 72. As shown, the receiver portion 80 is connected to an end 76 of the base 72 such that the receiver portion 80 is arranged axisymmetrically about axis X.

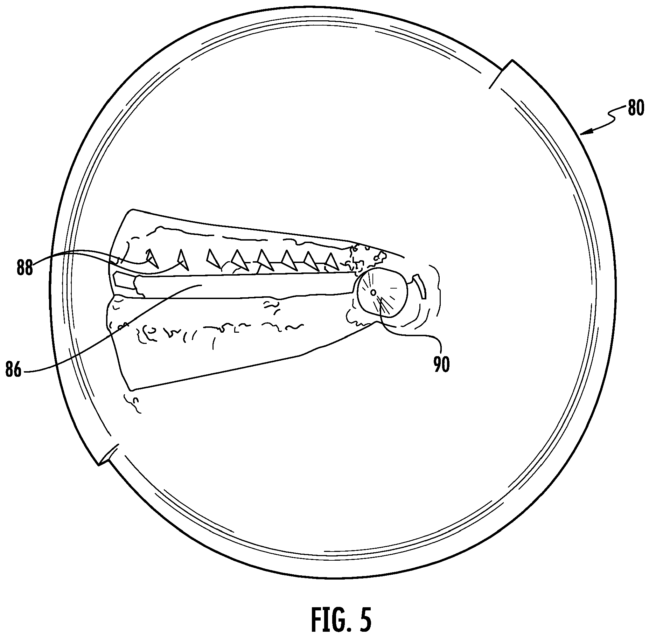

A slot 86 extending vertically and/or circumferentially is formed in a sidewall 84 of the receiver portion 80. Arranged directly adjacent the slot 86 is at least one cutting edge 88, such as a blade for example. In the illustrated, non-limiting embodiment of FIG. 5, a plurality of blades 88 are mounted directly adjacent the slot 86. However, embodiments where the receiver portion 80 includes only a single cutting edge 88 are also within the scope of the present disclosure. In addition, the orientation and type of cutting edge 88 may be varied to achieve different shapes and textures. In embodiments including more than one cutting edge, each strand formed by a respective cutting edge 88 may be substantially identical, or alternatively, may be different.

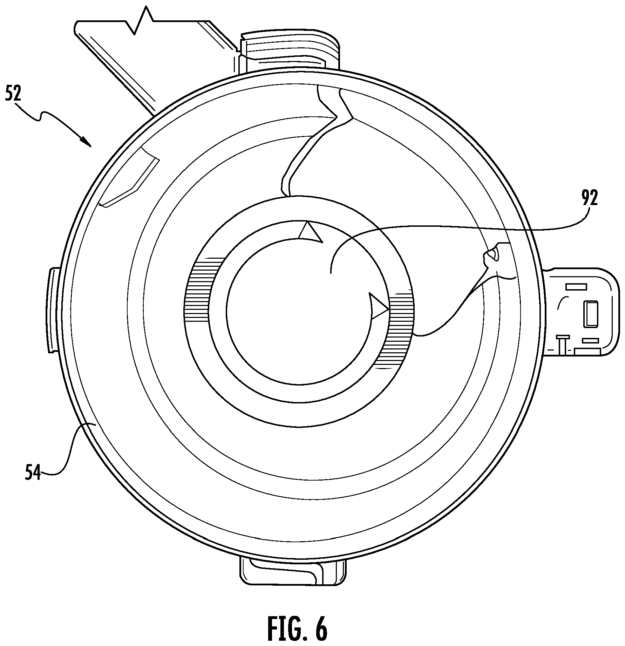

Referring now to FIGS. 6-10, to use the food processor 20 when the spiralizer blade attachment 70 is coupled to the rotatable assembly 60 within the interior chamber 48 of the container 40, a food item is inserted into the interior of the receiver portion 80 such that both the cutting edge 88 and food item extend vertically, in a generally parallel orientation. A protrusion or spike 90 may extend inwardly from the first end 82 of the receiver portion 80. The protrusion 90 is configured to pierce the food item, to limit movement of the food item from the receiver portion 80. In one embodiment, a feed opening 92 is formed in the lid 52 to provide limited access to the chamber 48 of the container 40 when the food processor 20 is operation. The feed opening 92 is sized to allow a food item configured for use with the spiralizer blade attachment 70 to pass there through while maintaining a safe distance between a user's hand and the blade attachment 70. In addition, the feed opening 92 is positioned so as to allow a user to easily insert food into the receiver portion 80 of the spiralizer blade attachment 70. In one embodiment, the feed opening 92 is a chute extending upwardly from the lid 52. In some embodiments, the feed opening 92 may be generally aligned with the blade attachment 70, centered about the axis of rotation X.

As the motorized unit operates, the engagement between the rotary coupling of the base 22 and the coupling component of the rotatable assembly 60 drives the spindle 62, and therefore the spiralizer blade attachment 70 mounted thereto, about axis X. This rotation causes the spiralizer blade attachment 70 to rotate about the exterior of a food item arranged within the receiver portion 80. As the spiralizer blade attachment 70 rotates, the at least one cutting edge 88 engages a portion of the food item, thereby generating one or more long, continuous strands of the food item extending through the cutting slot. The thickness of the strands formed may be controlled by varying the angle at which the cutting edge 88 contacts the food item.

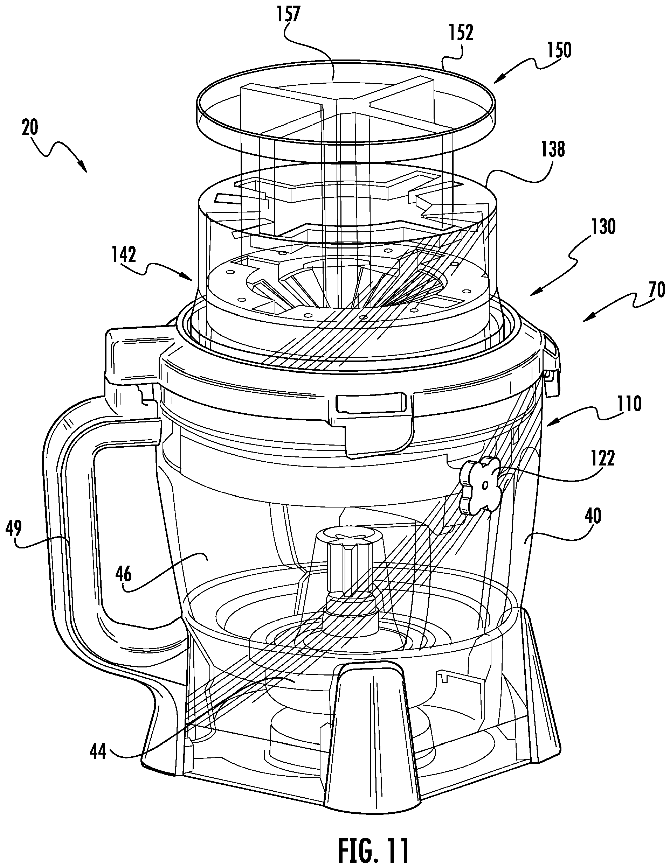

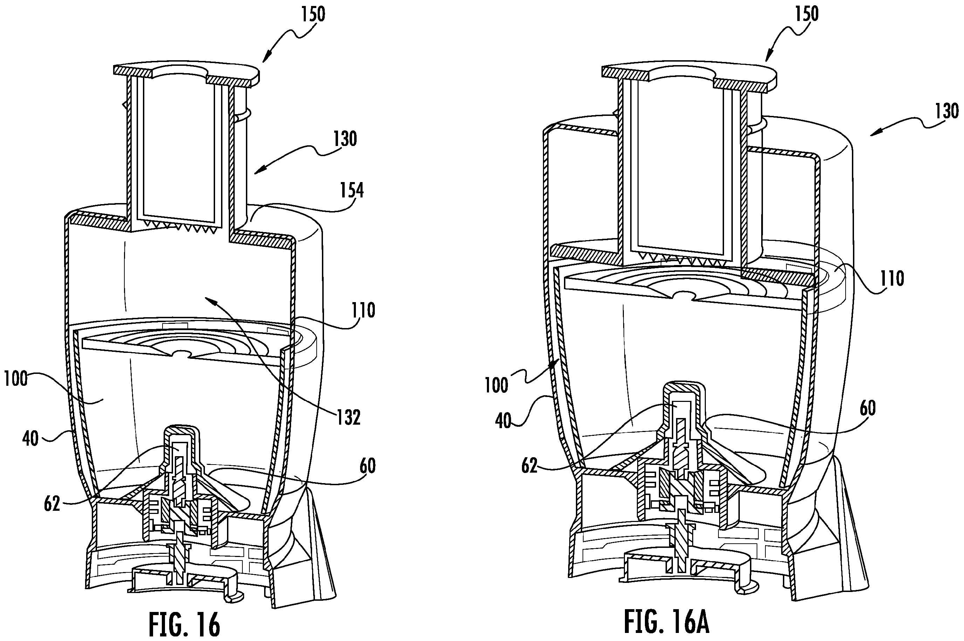

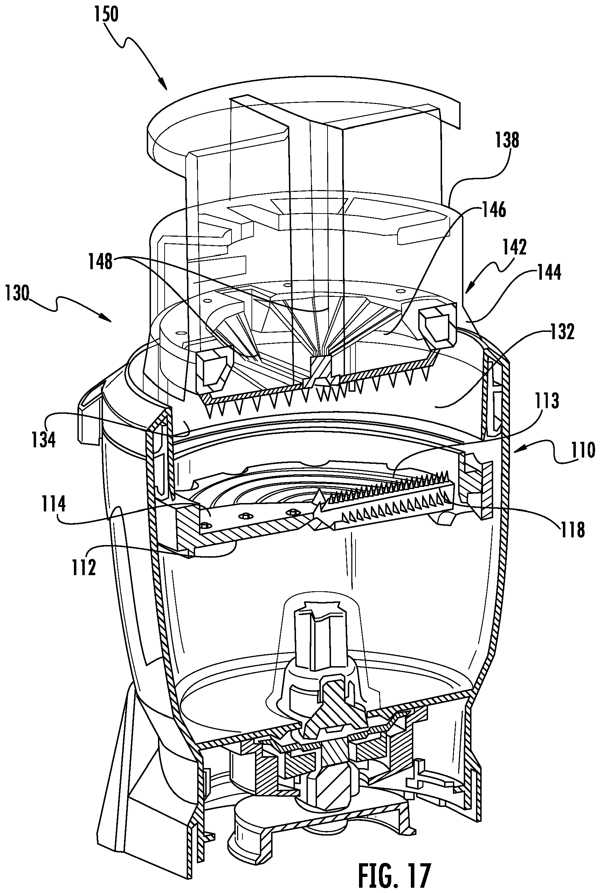

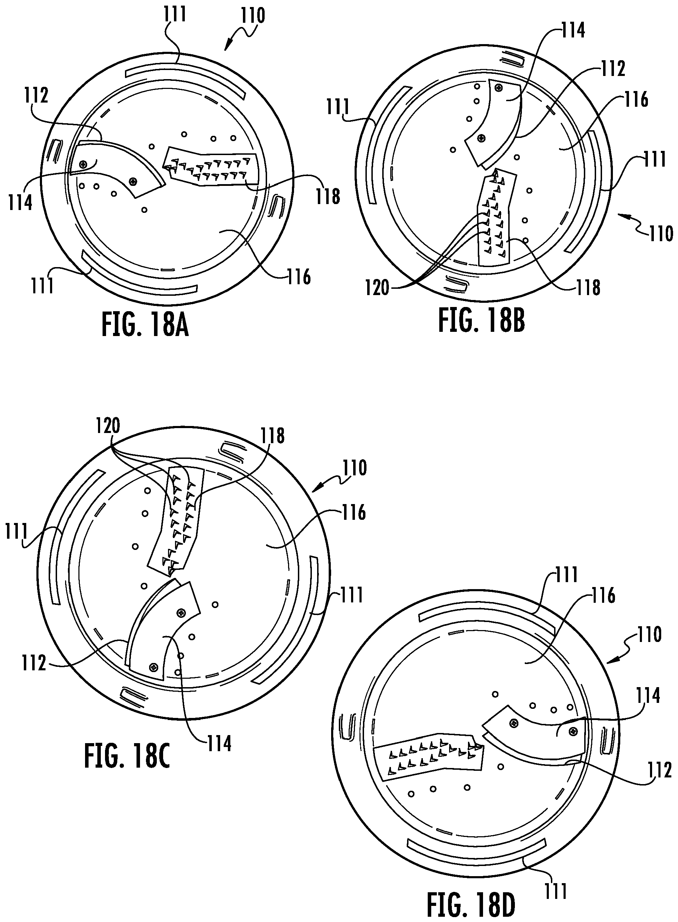

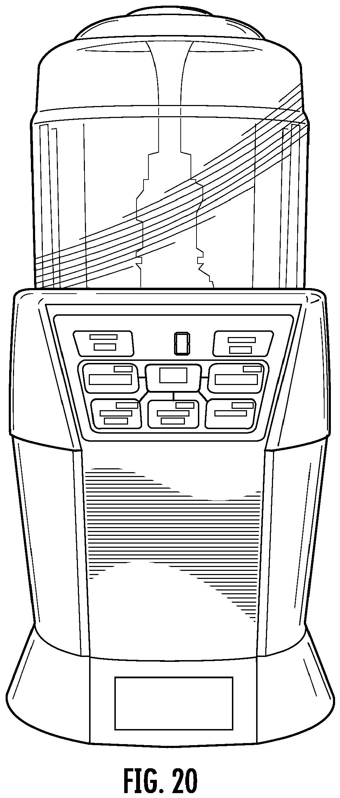

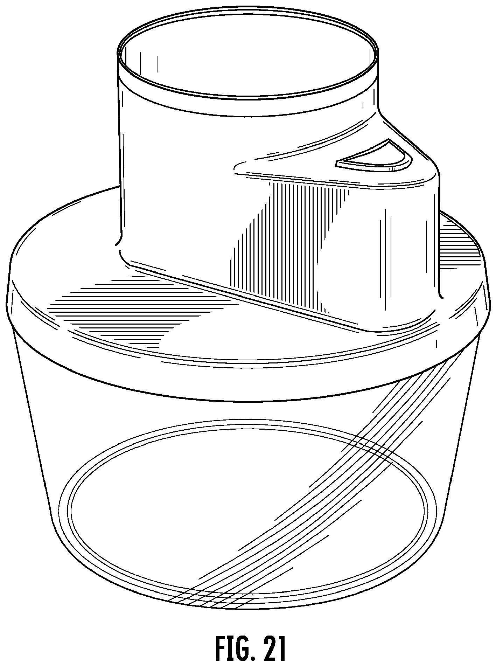

Another embodiment of a spiralizer attachment is illustrated in FIGS. 11-19. The spiralizer attachment 70 includes a blade plate 110 (best shown in FIGS. 18a-18d) configured to directly or indirectly couple to a rotating component, such as a portion of the rotatable assembly 60 when used in a food processing system 20. Although the spiralizer attachment 70 is generally illustrated and described with respect to a food processing system 20, the spiralizer attachment 70 may be suitable for use in any system configured to drive rotation of the attachment 70 about an axis, such as a single serving blending system having a removable lid (FIG. 20) or a salad station, such as having a feed chute and a motor (FIG. 21) for example. Further, the rotation of the attachment 70 about an axis may be powered by a motor, or alternatively, may be driven by a manual operation.

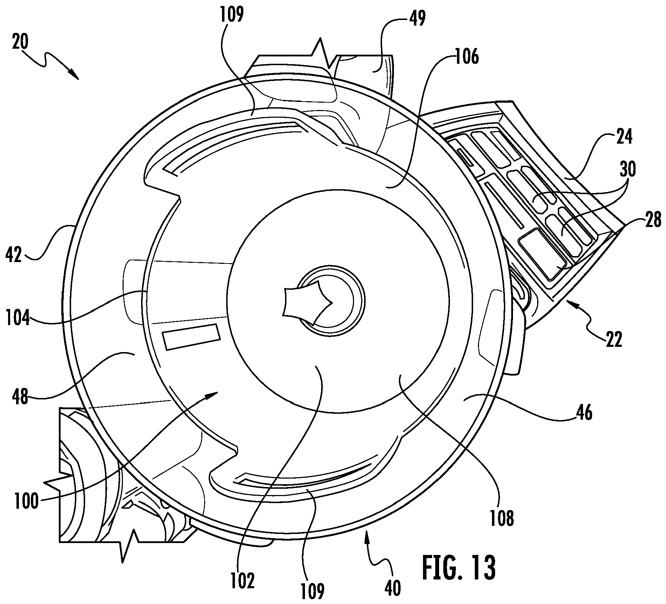

In one embodiment, the blade plate 110 removably mounts to a base 100 positioned within the container 40 and coupled to the rotatable assembly 60, such as the spindle 62 for example. A protective lining material (not shown) may be positioned about a corresponding portion of the base 100 to prevent damage as a result of the engagement with the rotating spindle 62. An example of the base 100 is illustrated in more detail in FIGS. 11-16. As shown, the base 100 includes a first sealed end 102, a second open end 104, and at least one sidewall 106 extending between the first end 102 and the second end 104 to define a chamber 108 within which one or more processed food items may be received. In one embodiment, a portion of the base 100, such as the sidewall 106 or the sealed first end 102 includes one or more perforations through which liquid may drain from the chamber 108. The base 100 is sized such that the base 100 is wholly receivable within the chamber 48 of the container 40 and may rotate freely therein. In one embodiment, a contour of the sidewall 106 is generally complementary to the sidewall 46 of the container 40. The blade plate 110 may be configured to mount to the second, open end 104 of the base 100 such that the blade plate 100 rotates therewith. As shown in FIG. 13, the base 100 may additionally include at least one handle 109 connected to or integrally formed with the sidewall 106 to allow a user to easily separate the base 100 from the container 40. The blade plate 110 may include one or more openings 111 for receiving the at least one handle 109 of base 100.

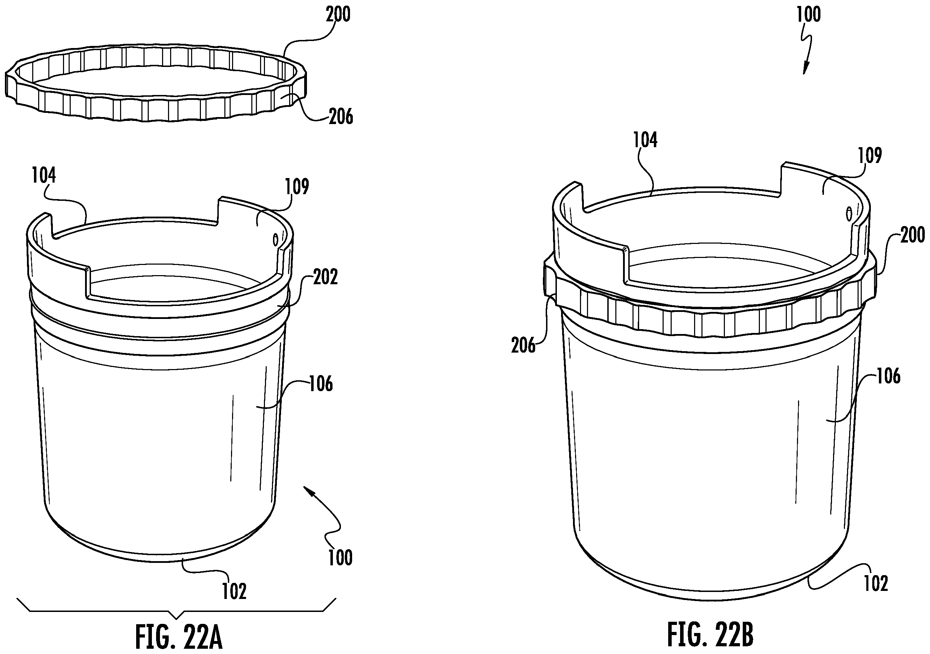

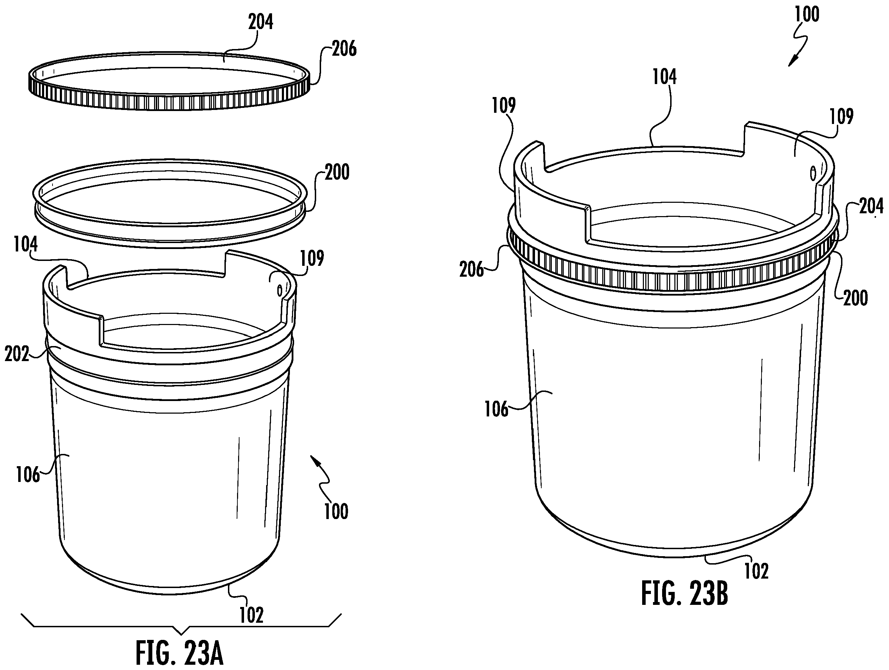

With reference to FIGS. 22-23, in an embodiment, a ring-like member 200 is arranged about a periphery of the base 100, such as generally adjacent or beneath the at least one handle 109 for example. In an embodiment, the ring-like member 200 is complementary to and is positioned within a channel 202 formed in the base 100. The ring-like member 200 may be formed from any suitable material, including but not limited to a plastic, such as polyoxymethylene for example. The ring-like member 200 may additionally include a silicone band 204 configured to overlap or mate therewith. Inclusion of the ring-like member 200 is intended to limit or minimize wobbling of the base 100 relative to the axis of the spindle 62. In an embodiment, the ring-like member 200 and/or the silicone band 204 is textured, such that an outwardly facing, textured surface 206 engages an adjacent surface of the container 40 to restrict skewed movement of the base 100.

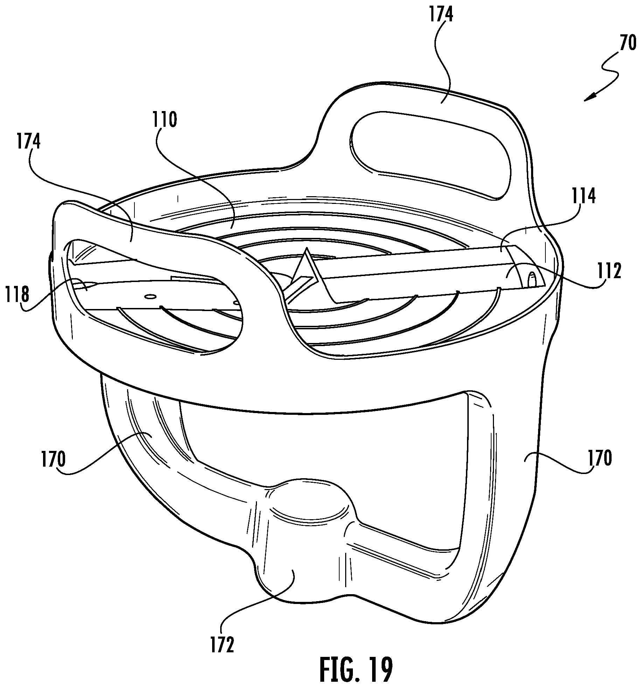

In another embodiment, illustrated in FIG. 19, the blade plate 110 includes at least one support arm 170 configured to removably couple to a portion of the rotating assembly 60. As shown, the blade plate 110 includes a first arm 170 and a second arm 170 arranged diametrically opposite one another about the periphery of the blade plate 110. The first and second arm 170, extend vertically and horizontally beyond a lower surface of the blade plate 110 such that the arms 170 have a contour generally complementary to the sidewall 46 and the second, closed end 44 of the container 40. The intersection of the arms 170 defines an area 172 configured to mount to the rotating assembly 60. The rotational component to which the arms 170 are coupled extends only a short distance towards the blade plate 110. By maximizing the open area between the blade plate 110 and second end 42 of the container 40, obstacles, such as the spindle 62 for example, on which the processed food items may become entangled are eliminated, or at least substantially reduced. Although the blade plate 110 is illustrated as having two arms, embodiments having a single arm, or more than two arms are within the scope of the disclosure. In addition, the blade plate 110 may include at least one handle 174 extending from the blade plate 110 in a direction opposite the at least one arm 170. The at least one handle 174 may provide a user with a means for easily removing the spiralizer attachment 70 from the chamber 48 of a container 40.

With reference again to FIGS. 11-19, in each of the embodiments of the blade plate 110 includes a slot 112 and a first blade 114 mounted directly adjacent the slot 112. The first blade 114 is configured to contact and slice an exterior portion of a food item. As a result, the positioning of the first blade 114, i.e. a height thereof for example, may be adjusted to control a thickness of the slice formed. A second blade 118 is similarly mounted the blade plate 110. The second blade 118 includes one or more cutting surfaces 120 extending therefrom and is configured to cut the one or more slices formed by the first blade 114 extending below the blade plate 110 into a plurality of strands. In embodiments including more than one cutting surface 120, each strand formed by a respective cutting surface 120 may be substantially identical, or alternatively, may be different.

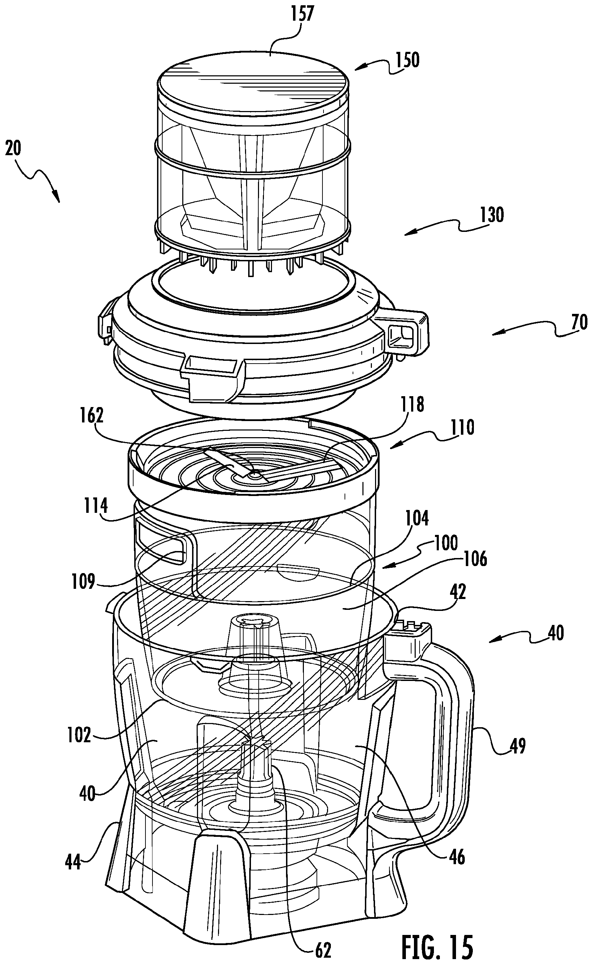

Depending on the configuration of the at least one cutting surface 120 of the second blade 118, the second blade 118 may be configured to not only cut the formed slice across a width, but also along its length, for example to form one or more noodles of desired dimensions. As shown, the first blade 114 and the second blade 118 are arranged generally 180 degrees apart relative to disc blade 110. However, embodiments where the first blade 114 and the second blade 118 are arranged closer together, such as shown in FIG. 15, or further apart are also within the scope of the disclosure. The positioning of the second blade 118 relative to the first blade 114 may be used to control the length of the plurality of noodles formed.

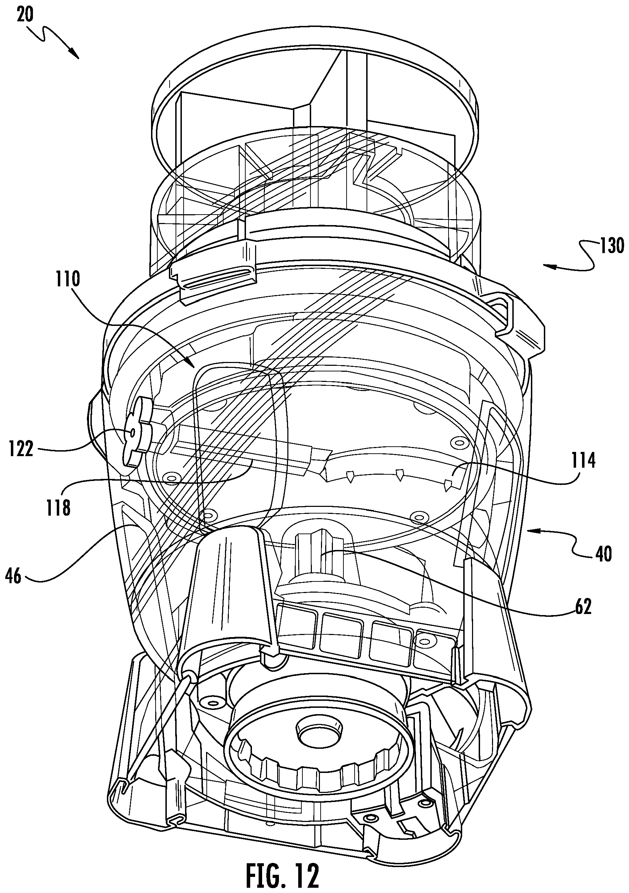

In one embodiment, the second blade 118 may be selected from one of a plurality of interchangeable blades having various cutting surface configurations. Examples of some of the configurations of the interchangeable second blades 118 are shown in FIGS. 18a-18d. In one embodiment, best shown in FIG. 12, a plurality of second blades 118 having various cutting surface 120 configurations may be mounted to a movable component 122 connected to the blade plate 110. In such embodiments, a user may select one of the plurality of second blades 118 by moving, such as by rotating for example, the movable component 122 such that the desired second blade 118 is in an active position, exposed at the underside 116 of the blade plate 110 within the path of the sliced food. The movable component 120 may be configured such that adjustment of the selected second blade 118 is only possible when the blade plate 110 is not attached to the base 100.

In some embodiments, the spiralizer attachment 70 may be used in conjunction with a conventional lid associated with the system 20 and having an opening for mounting a food item to the blade plate 110. However, in some embodiments, the spiralizer attachment 70 additionally includes a lid 130 configured to couple to the open end 42 of the container 40 within which the spiralizer attachment 70 is mounted. For example, when used in conjunction with a food processing system 20, lid 130 may be used in place of the conventional lid 52. In one embodiment, the lid 130 is configured to lock to the container 40, such as via rotation thereof for example, prior to operation of the food processing system 20. When the lid 130 is connected to the container 40, the lid 130 defines a hollow interior chamber 132 between an interior surface 134 of the lid 130 and the adjacent surface 113 of the blade plate 110. An opening 136 extends through an upper surface 138 of the lid 130. A diameter of the opening 136 is substantially smaller than a diameter of the lid 130.

In one embodiment, a food receiving component 142, such as a chute for example, is mounted within an interior of the lid 140. The food receiving component 142 may be movable between a first position adjacent the upper end 138 of the lid 130 and a position adjacent a lower portion 144 of the lid 130. However, a stationary food receiving component 142 is also considered within the scope of the disclosure. In the illustrated, non-limiting embodiment, the food receiving component 142 is slidable within the lid; however other mechanisms for movement, such as rolling or rotating for example are considered within the scope of the disclosure. An opening 146 having a diameter equal to or smaller than the opening 136 in the upper surface 138 of the lid 130 extends through the food receiving component 142 to the hollow interior 132.

In one embodiment, multiple jaws 148 extend inwardly from a portion of the lid 140, such as the food receiving component 142 towards an axis of the opening 146, or alternatively from a portion of the lid adjacent opening 136. The jaws 148 cooperate to maintain a food item received therein generally aligned about the central axis of the opening 146. The jaws 148 are movable to accommodate food items varying in size and/or shape. The jaws 148 may be formed from a resilient material, or alternatively, may include a biasing mechanism (not shown), such that when a food item is inserted into the opening 146, the jaws 148 move against their bias, and when the food item is removed from the opening 146, the jaws 148 are automatically biased back to a default position. Although the illustrated, non-limiting embodiment includes multiple jaws 148 mounted generally within a horizontal plane, embodiments having jaws 148 arranged at one or more vertical locations relative to the food receiving component 142 are within the scope of the disclosure.

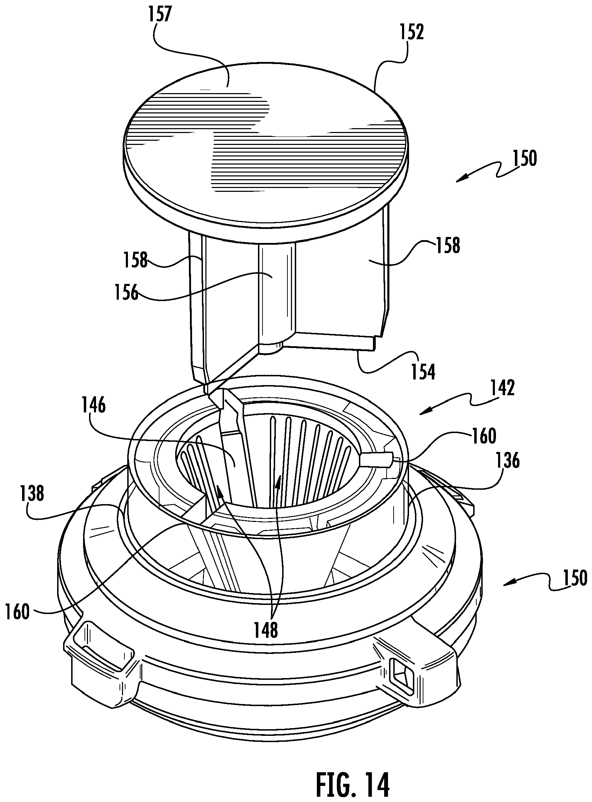

A plunger 150 may be used to maintain contact between a food item and the blade plate 110. An example of a plunger 150 is illustrated in FIG. 14. The plunger 150 includes a first end 152, a second end 154, and a shaft 156. In one embodiment, the first end 152 includes a flange or other planar surface 157 that allows a user to easily grip and apply a force to the plunger 150. The second end 154 of the plunger 150 may be contoured or include one or more protrusions, such as spikes for example, configured to engage and maintain contact with a food item. As shown, one or more features 158 may project generally outwardly from the shaft 156. As a result, a plurality of slots 160 generally complementary to the features 158 extend through not only the upper portion 138 of the lid 130, but also the food receiving component 142 such that the plunger 150 may be removably inserted into the hollow interior 132. In addition, the plunger 150 is configured to cooperate with the plurality of movable jaws 148 so that the plunger 150 is able to pass through the openings formed between the movable jaws 148 while gripping a food item.

To use the spiralizer attachment 70 of FIG. 19, the spiralizer attachment 70 is positioned within a container 40 and is coupled to a portion of a rotatable assembly 60. A food item is then arranged in contact with the upper surface of the blade plate 110. The food processor system 20 is initiated causing the blade plate 110 to rotate about an axis of rotation. Application of a force, such as with a plunger 150 for example, maintains the food item in alignment with a center of the blade plate 110. As the blade plate 110 rotates, the first blade 114 slices the food item and the second blade 118 to further splits the formed slice into a plurality of pieces or strands, which are collected within the container 40.

When the spiralizer attachment 70 of FIGS. 11-19 is used in conjunction with lid 130 to process smaller food items, the food item is inserted through the openings 136, 146 into the food receiving component 142. The food processor system 20 is initiated causing the spindle 62, and therefore the base 100 and blade plate 110 to rotate about an axis of rotation. As a force is applied to a portion of the food item via the plunger 150, the food item, held in alignment with a center of the blade plate 110 via the jaws 148, moves into contact with the blade plate 110 causing the first blade 114 to slice the food item and the second blade 118 to further split the formed slice into a plurality of pieces or strands. In one embodiment, a spike 162 extending upwardly from a central portion of the blade plate 110 assists in maintaining alignment of the food item as it is sliced. As the food item is sliced, continued pressure applied to the food item via the plunger 150 causes the food receiving component 142 to move relative to the lid 130 to maintain continuous contact between the food item and the blade plate 110 until the food item is substantially fully sliced.

To process a food item having a diameter larger than opening 146, the food item is positioned within the hollow interior 132 of the lid 130, directly in contact with the surface of the blade plate 110. After installing the plunger 150 into the corresponding openings 136, 146 and slots 160, the plunger 150 engages a portion of the food item. Upon activation of the food processing system 20, and with the application of pressure via the plunger 150, the first blade 114 contacts a portion of the food item to form one or more continuous slices of the food item extending through slot 112. Engagement of the one or more cutting surfaces 120 of the second blade 118 with the one or more continuous slices forms the continuous slices into a plurality of strands having a desired thickness and/or length. As previously described, the force applied by the plunger 150 maintains continuous contact between the food item and the blade plate 110 until the food item is substantially fully sliced.

Use of any embodiment of a spiralizer attachment 70 described herein with a food processing system 20 allows for the efficient slicing of one or more food items into a plurality of elongated strands similar to noodles. Motorized rotation of the attachment 70, and therefore the at least one cutting edge thereof, about a food item eliminates the struggle of manually rotating a food item relative to the cutting edge that exists in conventional hand-driven systems. In addition, the motorized rotation of the attachment 70 allows the food item to be sliced in its entirety, leaving only a minimal amount, if any, of uncut material.

All references, including publications, patent applications, and patents cited herein are hereby incorporated by reference to the same extent as if each reference were individually and specifically indicated to be incorporated by reference and were set forth in its entirety herein.

The use of the terms "a" and "an" and "the" and similar referents in the context of describing the invention (especially in the context of the following claims) is to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Exemplary embodiments of this invention are described herein, including the best mode known to the inventors for carrying out the invention. Variations of those embodiments may become apparent to those of ordinary skill in the art upon reading the foregoing description. The inventors expect skilled artisans to employ such variations as appropriate, and the inventors intend for the invention to be practiced otherwise than as specifically described herein.

## Claims

1. A spiralizer attachment (70) for a kitchen appliance comprising:
a blade plate (110) including a first arm (170) and a second arm (170) arranged diametrically opposite one another about a periphery of said blade plate (110), said blade plate (110) further including a slot (112) and at least one blade (114, 118),
wherein rotation of said blade plate (110) relative to a food item forms at least one continuous slice of said food item; and
wherein an interface between said first arm (170) and said second arm (170) couples said blade plate (110) to a rotating component.

2. The spiralizer attachment (70) according to claim 1, wherein an area (172) extending between said first and second arms (170) and said blade plate (110) is substantially free from obstacles.

3. The spiralizer attachment (70) according to claim 1, wherein said blade plate (110) is rotated about an axis (a) by a motor or (b) manually.

4. The spiralizer attachment (70) according to claim 1, wherein said blade plate (110) is rotatably mounted within a container.

5. The spiralizer attachment (70) according to claim 1, wherein said kitchen appliance is a food processing system.

6. The spiralizer attachment (70) according to claim 1, wherein said kitchen appliance is a single serving food processing system.

7. A method of spiralizing a food item, comprising:
installing a spiralizer attachment (70) within a kitchen appliance, the spiralizer attachment (70) including a rotatable blade plate (110) having a slot (112) and at least one blade (114, 118), said blade plate (110) further including a first arm (170) and a second arm (170) arranged diametrically opposite one another about a periphery of said blade plate (110), an interface between said first arm (170) and said second arm (170) coupling said blade plate (110) to a rotating component;
arranging a food item in contact with a surface of the spiralizer attachment (70); and
operating said kitchen appliance such that said blade plate (110) rotates about an axis relative to said food item to form at least one continuous slice of the food item.

8. The method according to claim 7, wherein installing said spiralizer attachment (70) includes coupling said spiralizer attachment (70) to said rotating component of said kitchen appliance.

9. The method according to claim 8, wherein said spiralizer attachment (70) is directly coupled to said rotating component.

10. The method according to claim 8, wherein said spiralizer attachment (70) is indirectly coupled to said rotating component.

11. The method according to claim 8, wherein said kitchen appliance includes a base (100) mounted to said rotating component, said spiralizer attachment (70) being mounted to said base (100).

12. The method according to claim 7, wherein said blade plate (110) is rotated about an axis (a) by a motor or (b) manually.

## Patentansprüche

1. Spiralaufsatz (70) für ein Küchengerät, umfassend:
eine Klingenplatte (110), die einen ersten Arm (170) und einen zweiten Arm (170) beinhaltet, die einander diametral gegenüberliegend um einen Umfang der Klingenplatte (110) angeordnet sind, wobei die Klingenplatte (110) ferner einen Schlitz (112) und mindestens eine Klinge (114, 118) beinhaltet, wobei eine Drehung der Klingenplatte (110) relativ zu einem Lebensmittel mindestens eine fortlaufende Scheibe des Lebensmittels bildet; und
wobei eine Schnittstelle zwischen dem ersten Arm (170) und dem zweiten Arm (170) die Klingenplatte (110) mit einem sich drehenden Bauteil koppelt.

2. Spiralaufsatz (70) nach Anspruch 1, wobei ein Bereich (172), der sich zwischen dem ersten und dem zweiten Arm (170) und der Klingenplatte (110) erstreckt, im Wesentlichen frei von Hindernissen ist.

3. Spiralaufsatz (70) nach Anspruch 1, wobei die Klingenplatte (110) (a) durch einen Motor oder (b) manuell um eine Achse gedreht wird.

4. Spiralaufsatz (70) nach Anspruch 1, wobei die Klingenplatte (110) drehbar innerhalb eines Behälters montiert ist.

5. Spiralaufsatz (70) nach Anspruch 1, **dadurch gekennzeichnet, dass** das Küchengerät ein Lebensmittelverarbeitungssystem ist.

6. Spiralaufsatz (70) nach Anspruch 1, **dadurch gekennzeichnet, dass** das Küchengerät ein Einzelportionen-Lebensmittelverarbeitungssystem ist.

7. Verfahren zum Spiralisieren eines Lebensmittels, umfassend:
Einbauen eines Spiralaufsatzes (70) innerhalb eines Küchengeräts, wobei der Spiralaufsatz (70) eine drehbare Klingenplatte (110) mit einem Schlitz (112) und mindestens einer Klinge (114, 118) beinhaltet, wobei die Klingenplatte (110) ferner einen ersten Arm (170) und einen zweiten Arm (170) beinhaltet, die einander diametral gegenüberliegend um einen Umfang der Klingenplatte (110) angeordnet sind, wobei eine Schnittstelle zwischen dem ersten Arm (170) und dem zweiten Arm (170) die Klingenplatte (110) mit einem sich drehenden Bauteil koppelt;
Anordnen eines Lebensmittels in Kontakt mit einer Oberfläche des Spiralaufsatzes (70); und
Betreiben des Küchengeräts derart, dass sich die Klingenplatte (110) um eine Achse relativ zu dem Lebensmittel dreht, um mindestens eine fortlaufende Scheibe des Lebensmittels zu bilden.

8. Verfahren nach Anspruch 7, wobei das Einbauen des Spiralaufsatzes (70) Koppeln des Spiralaufsatzes (70) mit dem sich drehenden Bauteil des Küchengeräts beinhaltet.

9. Verfahren nach Anspruch 8, wobei der Spiralaufsatz (70) direkt mit dem sich drehenden Bauteil gekoppelt ist.

10. Verfahren nach Anspruch 8, wobei der Spiralaufsatz (70) indirekt mit dem sich drehenden Bauteil gekoppelt ist.

11. Verfahren nach Anspruch 8, wobei das Küchengerät einen Sockel (100) beinhaltet, der an dem sich drehenden Bauteil montiert ist, wobei der Spiralaufsatz (70) an dem Sockel (100) montiert ist.

12. Verfahren nach Anspruch 7, wobei die Klingenplatte (110) (a) durch einen Motor oder (b) manuell um eine Achse gedreht wird.

## Revendications

1. Accessoire spiraleur (70) pour appareil de cuisine comprenant :
une plaque à lame (110) comportant un premier bras (170) et un second bras (170) agencés de manière diamétralement opposée l'un à l'autre autour d'une périphérie de ladite plaque à lame (110), ladite plaque de lame (110) comportant en outre une fente (112) et au moins une lame (114, 118),
dans lequel la rotation de ladite plaque à lame (110) par rapport à un aliment forme au moins une tranche continue dudit aliment ; et
dans lequel une interface entre ledit premier bras (170) et ledit second bras (170) couple ladite plaque à lame (110) à un composant rotatif.

2. Accessoire spiraleur (70) selon la revendication 1, dans lequel une zone (172) s'étendant entre lesdits premier et second bras (170) et ladite plaque à lame (110) est sensiblement exempte d'obstacles.

3. Accessoire spiraleur (70) selon la revendication 1, dans lequel ladite plaque à lame (110) est entraînée en rotation autour d'un axe (a) par un moteur ou (b) manuellement.

4. Accessoire spiraleur (70) selon la revendication 1, dans lequel ladite plaque à lame (110) est montée en rotation à l'intérieur d'un contenant.

5. Accessoire spiraleur (70) selon la revendication 1, dans lequel ledit appareil de cuisine est un robot culinaire.

6. Accessoire spiraleur (70) selon la revendication 1, dans lequel ledit appareil de cuisine est un robot culinaire à portion unique.

7. Procédé de spiralisation d'un aliment, comprenant :
l'installation d'un accessoire spiraleur (70) dans un appareil de cuisine, l'accessoire spiraleur (70) comportant une plaque à lame rotative (110) présentant une fente (112) et au moins une lame (114, 118), ladite plaque à lame (110) comportant en outre un premier bras (170) et un second bras (170) agencés de manière diamétralement opposée l'un à l'autre autour d'une périphérie de ladite plaque à lame (110), une interface entre ledit premier bras (170) et ledit second bras (170) couplant ladite plaque à lame (110) à un composant rotatif ;
l'agencement d'un aliment au contact d'une surface de l'accessoire spiraleur (70) ; et
le fonctionnement dudit appareil de cuisine de sorte que ladite plaque à lame (110) tourne autour d'un axe par rapport audit aliment pour former au moins une tranche continue de l'aliment.

8. Procédé selon la revendication 7, dans lequel la mise en place dudit accessoire spiraleur (70) comporte le couplage dudit accessoire spiraleur (70) audit composant rotatif dudit appareil de cuisine.

9. Procédé selon la revendication 8, dans lequel ledit accessoire spiraleur (70) est directement couplé audit composant rotatif.

10. Procédé selon la revendication 8, dans lequel ledit accessoire spiraleur (70) est couplé indirectement audit composant rotatif.

11. Procédé selon la revendication 8, dans lequel ledit appareil de cuisine comporte une embase (100) montée sur ledit composant rotatif, ledit accessoire spiraleur (70) étant monté sur ladite embase (100).

12. Procédé selon la revendication 7, dans lequel ladite plaque à lame (110) est entraînée en rotation autour d'un axe (a) par un moteur ou (b) manuellement.
